(19) Europäisches Patentamt

European Patent Office

Office européen des brevets

(11) **EP 1 065 798 A1**

(12) **EUROPEAN PATENT APPLICATION**
published in accordance with Art. 158(3) EPC

(43) Date of publication:
03.01.2001 Bulletin 2001/01

(51) Int. Cl.7: **H04B 1/707**

(21) Application number: 00900405.2

(86) International application number:
**PCT/JP00/00166**

(22) Date of filing: 17.01.2000

(87) International publication number:
**WO 00/42712 (20.07.2000 Gazette 2000/29)**

(84) Designated Contracting States:
**AT BE CH CY DE DK ES FI FR GB GR IE IT LI LU MC NL PT SE**

(30) Priority: **18.01.1999 JP 911099**

(71) Applicant:
**MATSUSHITA ELECTRIC INDUSTRIAL CO., LTD.**
**Kadoma-shi, Osaka 571-8501 (JP)**

(72) Inventor: **TODA, Takashi**
**Ishikawa-gun, Ishikawa 921-8824 (JP)**

(74) Representative:
**Grünecker, Kinkeldey,**
**Stockmair & Schwanhäusser**
**Anwaltssozietät**
**Maximilianstrasse 58**
**80538 München (DE)**

(54) **RECEIVER AND METHOD OF RECEPTION**

(57) Known symbol detection section 104 decides whether a reception signal is being sent or not. When known symbol detection section 104 decides that no reception signal is being sent, despreading code setting section 105 controls despreading section 103 so that the spreading code is changed to a spreading code for a common control channel and despreading section 103 receives a common control channel signal. Known symbol extraction section 106 extracts a known symbol in the communication channel signal or in the common control channel signal. Phase rotation speed detection section 107 detects the phase rotation speed of the known symbol extracted by known symbol extraction section 106. AFC 108 carries out AFC using the detected phase rotation speed.

FIG. 2

EP 1 065 798 A1

**Description**

Technical Field

The present invention relates to a reception apparatus, and more particularly, to a reception apparatus used for a communication based on a Code Division Multiple Access (hereinafter referred to as "CDMA") system.

Background Art

In recent years, there is a growing demand for a terrestrial mobile communication system such as a car phone and cellular phone and technologies for effective frequency utilization to secure not only high-speed, high-quality transmission but also the largest possible subscriber capacity with a limited frequency band are of increasing importance.

As one of multiple access systems for effective utilization of frequencies, a CDMA system is becoming a focus of attention. The CDMA system is a multiple access system using a spread spectrum communication technology and has such advantages that it is less susceptible to the influence of multi-path distortion and can also measure up to expectations of having a diversity effect by combining multi-path components at a maximum ratio.

In the CDMA system, a reception apparatus normally finds a phase rotation speed per one symbol from a phase rotation of a known symbol in the reception signal on a rectangular coordinate plane, performs auto frequency control (hereinafter referred to as "AFC") and corrects frequency drifts.

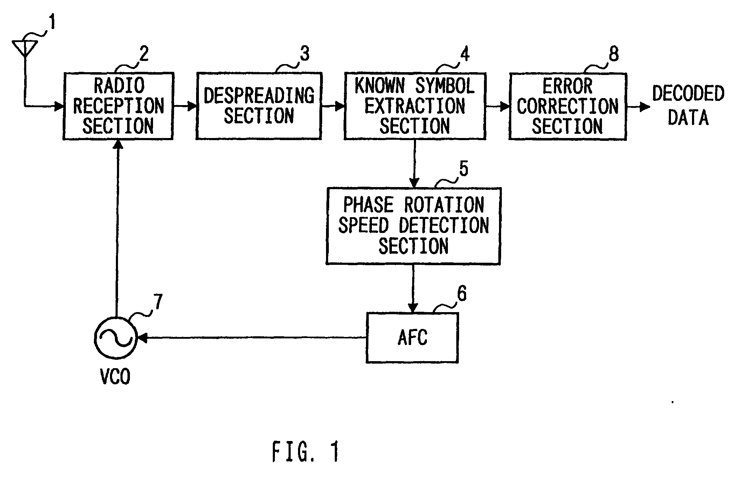

A conventional CDMA-based reception apparatus (hereinafter simply referred to as "reception apparatus") will be explained using FIG.1 below. FIG.1 is a block diagram showing a configuration of a conventional reception apparatus. In FIG.1, antenna 1 receives a radio signal including a signal directed to the own station with a known symbol inserted into user data (hereinafter referred to as "desired signal"). Radio reception section 2 carries out amplification processing and quasi-coherent detection processing on the signal received from antenna 1 (reception signal) and detects baseband signals of an I component and Q component of the reception signal.

Despreading section 3 multiplies the reception signal subjected to quasi-coherent detection processing by multiplying a spreading code and extracts a desired signal. Known symbol extraction section 4 extracts a known symbol (for example, a pilot symbol) and user data from the desired signal. Furthermore, known symbol extraction section 4 outputs the extracted known symbol to phase rotation speed detection section 5, which will be described later, and outputs the extracted user data to error correction section 8, which will be described later.

Phase rotation speed detection section 5 is, for example, an operator that performs an arc tangent operation and calculates a phase angle of the extracted known symbol on the rectangular coordinate plane, that is, an amount of phase rotation. Furthermore, phase rotation speed detection section 5 detects from the calculated amount of phase rotation a phase variation during one-symbol period, that is, the phase rotation speed of the reception signal. Here, the reason that the phase rotation speed instead of the amount of phase rotation is detected is that the amount of phase rotation includes an initial phase error with the other station of radio communication and it is not possible to exclusively detect an error of the oscillator of the own station.

AFC 6 controls voltage controlled oscillator (hereinafter referred to as "VCO") 7, which will be described later, using the phase rotation speed of the detected desired signal. VCO 7 is an oscillator used for quasi-coherent detection processing in radio reception section 2 and controlled by AFC 6. Error correction section 8 performs error correction processing on the user data.

Thus, the conventional reception apparatus detects a phase rotation speed of a desired signal using a known symbol of the received desired signal, carries out AFC based on this phase rotation speed and thereby corrects frequency drifts. In this way, the conventional reception apparatus carries out accurate correction of frequency drifts and reduces carrier frequency errors.

In radio communications, a mobile station apparatus, which is required to meet a strong demand for implementation of a smaller, lighter apparatus, does not use a crystal with sufficient accuracy for the oscillator, which makes it susceptible to carrier frequency errors caused by not only fading but also a temperature variation and time variation of batteries. Furthermore, the mobile station apparatus cannot perform temperature control of crystals so thoroughly as the base station apparatus, and so errors produced are even greater. Thus, for a reception apparatus, a mobile station in particular, it is of particular importance to carry out accurate AFC.

However, the conventional reception apparatus has such problems as shown below. That is, a radio station (for example, base station) normally sends only pilot symbols (for example, known symbols) so that the other communication station (for example, mobile station) can perform AFC even if there is no user data to be sent.

On the other hand, in order to reduce transmit power and increase the number of subscribers, a system that stops transmission of known symbols when no user data is sent is proposed in recent years. A packet communication for which a non-transmission section (that is, a time during which neither user data nor known symbol is sent) is originally scheduled is also proposed.

The conventional reception apparatus cannot perform AFC in a system that has a period during which no desired signal is sent from the other communication station through a communication channel during a radio communication, and therefore the conventional reception apparatus has a problem of being unable to correct frequency drifts.

Disclosure of Invention

The present invention has been implemented taking account of the problems described above and it is an object of the present invention to provide a reception apparatus capable of correcting frequency drifts not only for a period during which the other communication station is sending a desired signal through a communication channel but also for a period during which the other communication station is not sending a desired signal through a communication channel.

This object is achieved, when the other communication station is not sending a desired signal, by the reception apparatus resetting a spreading code and by the reception apparatus carrying out AFC processing using a known symbol of a signal being sent by the other communication station through a channel other than the communication channel.

Brief Description of Drawings

FIG.1 is a block diagram showing a configuration of a conventional reception apparatus;
FIG.2 is a block diagram showing a configuration of a reception apparatus according to Embodiment 1 of the present invention;
FIG.3 is a block diagram showing a configuration of a reception apparatus according to Embodiment 2 of the present invention;
FIG.4 is a block diagram showing a configuration of a reception apparatus according to Embodiment 3 of the present invention;
FIG.5 is a block diagram showing a configuration of a reception apparatus according to Embodiment 4 of the present invention;
FIG.6 is a block diagram showing a configuration of a reception apparatus according to Embodiment 5 of the present invention;
FIG.7 is a block diagram showing a configuration of a reception apparatus according to Embodiment 6 of the present invention;
FIG.8 is a block diagram showing a configuration of a reception apparatus according to Embodiment 7 of the present invention;
FIG.9 is a block diagram showing a configuration of a reception apparatus according to Embodiment 8 of the present invention;
FIG.10 is a block diagram showing a configuration of a reception apparatus according to Embodiment 9 of the present invention;
FIG.11 is a block diagram showing a configuration of a reception apparatus according to Embodiment 10 of the present invention; and
FIG.12 is a block diagram showing a configuration of a reception apparatus according to Embodiment 11 of the present invention.

Best Mode for Carrying out the Invention

With reference now to the attached drawings, embodiments of the present invention will, be explained in detail below.

(Embodiment 1)

The reception apparatus according to this embodiment has a plurality of spreading codes and carries out a radio communication with the other communication station that always transmits a known symbol through a common control channel. Furthermore, when this other communication station stops sending a desired signal using a communication channel, the reception apparatus according to this embodiment resets a spreading code and thereby switches from the communication channel to the common control channel and performs AFC using the received known symbol. Here, for convenience sake, suppose a signal sent by a radio station (for example, base station apparatus) using a common control channel is referred to as a "common control channel signal" and a signal sent by the radio station using a communication channel is referred to as a "communication channel signal" in the following explanations.

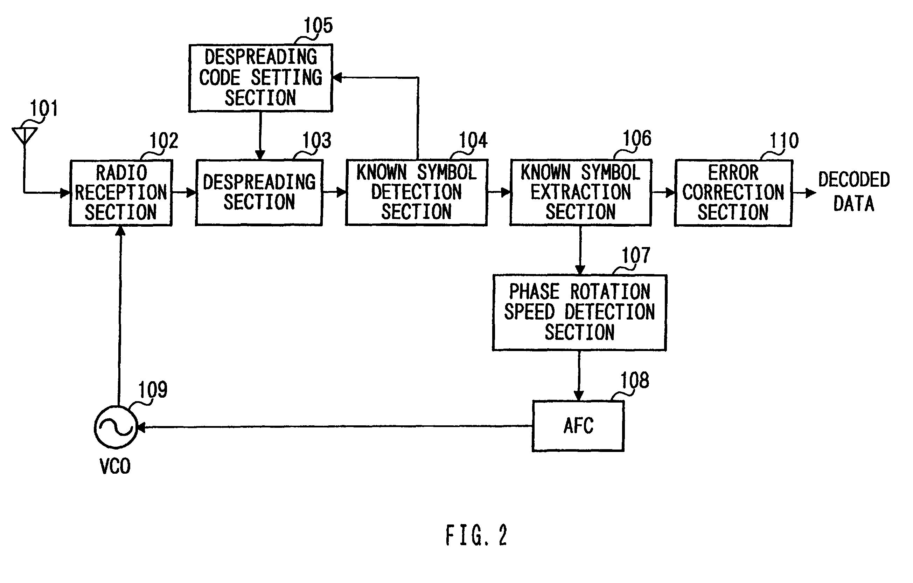

The reception apparatus according to this embodiment will be explained below using FIG.2. FIG.2 is a block diagram showing a configuration of the reception apparatus according to Embodiment 1 of the present invention. In FIG.2, antenna 101 receives a radio signal. Radio reception section 102 detects baseband signals of an I component and Q component of the reception signal by carrying out amplification processing and quasi-coherent detection processing on the signal received by antenna 101 (reception signal).

Despreading section 103 carries out despreading processing on the reception signal subjected to quasi-coherent detection processing by multiplying the reception signal by a spreading code. Known symbol detection section 104 decides whether the despread reception signal includes a known symbol of a desired signal or not. That is, known symbol detection section 104 decides whether the other communication station is sending a known symbol of a desired signal or not.

Despreading code setting section 105 has a plurality of spreading codes. Furthermore, when known symbol detection section 104 decides that the other communication station is not sending a known symbol of a desired signal, despreading code setting section 105 switches the spreading code used for despreading processing by despreading section 103 to a spreading code for a common control channel.

Known symbol extraction section 106 extracts a known symbol and user data from the desired signal. Furthermore, known symbol extraction section 106 outputs the extracted known symbol to phase rotation speed detection section 107, which will be described later, and outputs the extracted user data to error correction section 110, which will be described later.

Phase rotation speed detection section 107 is, for example, an operator carrying out an arc tangent operation, and calculates a phase angle (that is, amount of phase rotation) of the extracted known symbol on the rectangular coordinate plane and detects a phase variation during a one-symbol period (that is, the phase rotation speed of the reception signal) from the calculated amount of phase rotation.

AFC 108 is a frequency control section that controls VCO 109, which will be described later, using the phase rotation speed of the detected desired signal. VCO 109 is an oscillator used for quasi-coherent detection processing by radio reception section 102. Error correction section 110 performs error correction processing on the user data.

Next, the operation of the reception apparatus with the above configuration will be explained. A signal received by antenna 101 (reception signal) is subjected to amplification processing and quasi-coherent detection processing by radio reception section 102 and baseband signals of an I component and Q component of the reception signal are detected.

The reception signal subjected to quasi-coherent detection processing is multiplied by a spreading code for communication channel reception set by despreading code setting section 105 and subjected to despreading processing by despreading section 103.

The reception signal subjected to despreading processing is used for a decision as to whether the reception signal includes a known symbol of a desired signal or not by known symbol detection section 104.

In the case that it is decided that a known symbol is included, the desired signal extracted from the reception signal is sent from known symbol detection section 104 to known symbol extraction section 106.

In the case that it is decided that a known symbol is not included, known symbol detection section 104 outputs a signal instructing despreading code setting section 105 to change the despreading code to a spreading code for a common control channel. In this case, despreading code setting section 105 sets a spreading code for a common control channel and despreading section 103 receives a common control channel signal. After this, as described above, the despread reception signal from despreading section 103 is used for a decision as to whether the reception signal includes a known symbol of the desired signal or not by known symbol detection section 104. As a result, the desired signal extracted from the reception signal is sent from known symbol detection section 104 to known symbol extraction section 106.

Known symbol extraction section 106 extracts the known symbol and user data from the signal input from known symbol detection section 104. The extracted known symbol is output to phase rotation speed detection section 107 and the extracted user data is output to error correction section 110. Error correction section 110 carries out error correction processing on the user data.

As shown above, even if the other communication station does not send a communication channel signal, the reception apparatus according to this embodiment can always perform AFC using the known symbol of a common control channel signal by resetting a spreading code. This allows a carrier frequency error to be reduced in a system that does not send a known symbol when the other communication station does not send user data and a packet communication system for which intermittent transmission/reception is scheduled.

(Embodiment 2)

The configuration of the reception apparatus according to this embodiment is identical to the configuration of the reception apparatus of Embodiment 1 except that it is decided whether the other communication station is sending a known symbol through a communication channel or not based on power of a desired signal of a received known symbol (RSSI).

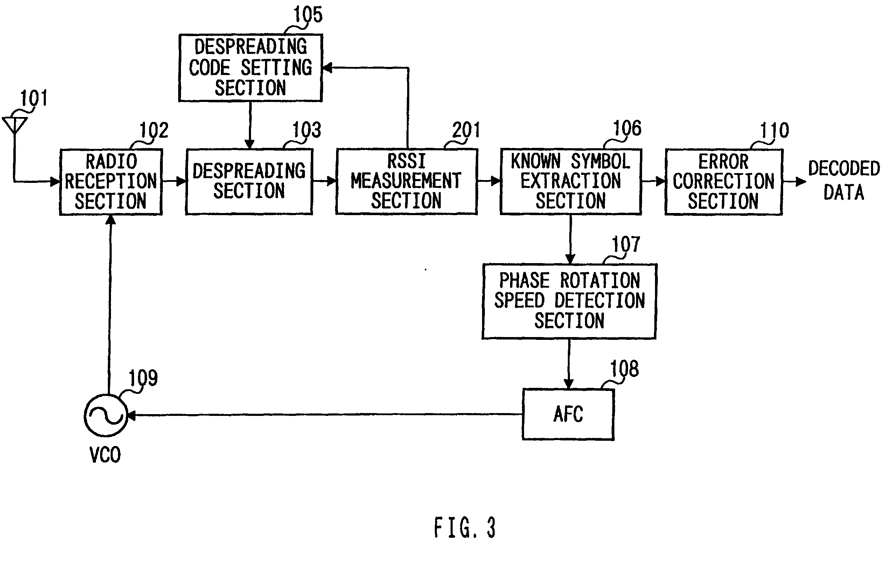

The reception apparatus according to this embodiment will be explained below with reference to FIG.3. FIG.3 is a block diagram showing a configuration of the reception apparatus according to Embodiment 2 of the present invention. The parts in FIG.3 with the same configuration as that of Embodiment 1 (FIG.2) are assigned the same reference numerals as those in FIG.2 and their detailed explanations will be omitted.

In FIG.3, RSSI measurement section 201 finds the square of the amplitude of the received known symbol and calculates RSSI of the known symbol. When RSSI of this known symbol is greater than a predetermined threshold, RSSI measurement section 201 decides that the known symbol is being sent.

Thus, according to this embodiment, the presence/absence of a known symbol in a communication channel is decided based on the power of a desired signal of a known symbol, which makes it possible to accurately detect a period during which no known symbols are sent and appropriately switch between spreading codes. This allows the reception apparatus to always carry out AFC even when the other communication station is not sending known symbols through a communication channel.

(Embodiment 3)

The configuration of the reception apparatus according to this embodiment is identical to the configuration of the reception apparatus of Embodiment 1 described above except that it is decided whether the other communication station is sending a known symbol through a communication channel or not based on the power of an interference signal of a known symbol (hereinafter referred to as "ISSI"). In general, when the interference signal component is large, it is not possible to attain sufficient reception quality no matter how large the reception power is.

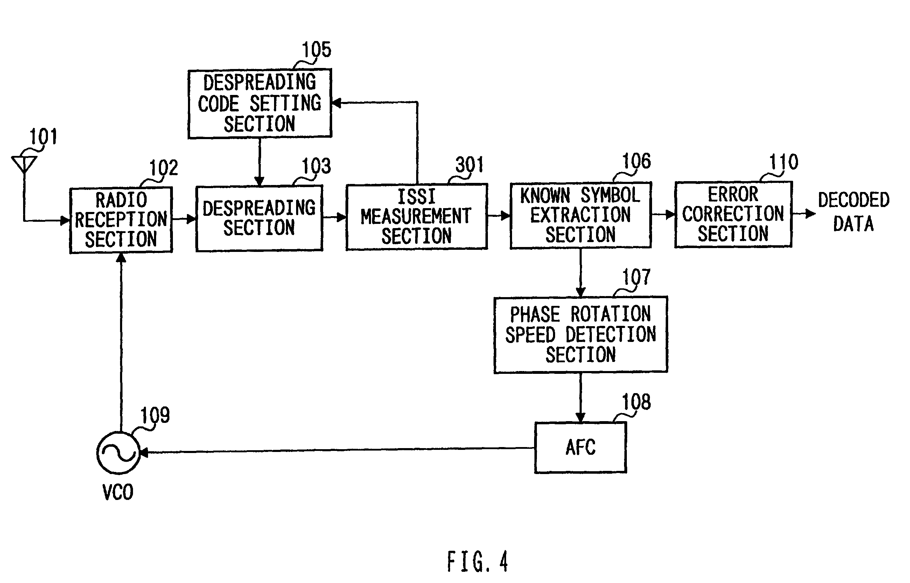

The reception apparatus according to this embodiment will be explained below with reference to FIG.4. FIG.4 is a block diagram showing a configuration of the reception apparatus according to Embodiment 3 of the present invention. The parts in FIG.4 with the same configuration as that of Embodiment 1 (FIG.2) are assigned the same reference numerals as those in FIG.2 and their detailed explanations will be omitted.

In FIG.4, ISSI measurement section 301 finds variance of the received known symbol and calculates ISSI. That is, ISSI measurement section 301 finds an average vector from the phase and amplitude of the known symbol section and user data section of the reception signal on a rectangular coordinate plane, finds the square of a difference between the amplitude of the known symbol and the amplitude of the average vector and a value obtained by adding up this value by a predetermined number of known symbols is assumed to be ISSI. Furthermore, when ISSI is greater than a predetermined threshold, ISSI measurement section 301 decides that no known symbols are sent.

Thus, according to this embodiment, the presence/absence of a known symbol in a communication channel is decided based on the power of an interference signal of a known symbol, which makes it possible to accurately detect a period during which no known symbols are sent and appropriately switch between spreading codes. This allows the reception apparatus to always carry out AFC even when the other communication station is not sending known symbols through a communication channel.

(Embodiment 4)

The configuration of the reception apparatus according to this embodiment is identical to the configuration of the reception apparatus of Embodiment 1 described above except that it is decided whether the other communication station is sending a known symbol through a communication channel or not based on a signal-to-interference ratio (hereinafter referred to as "SIR") of a received known symbol.

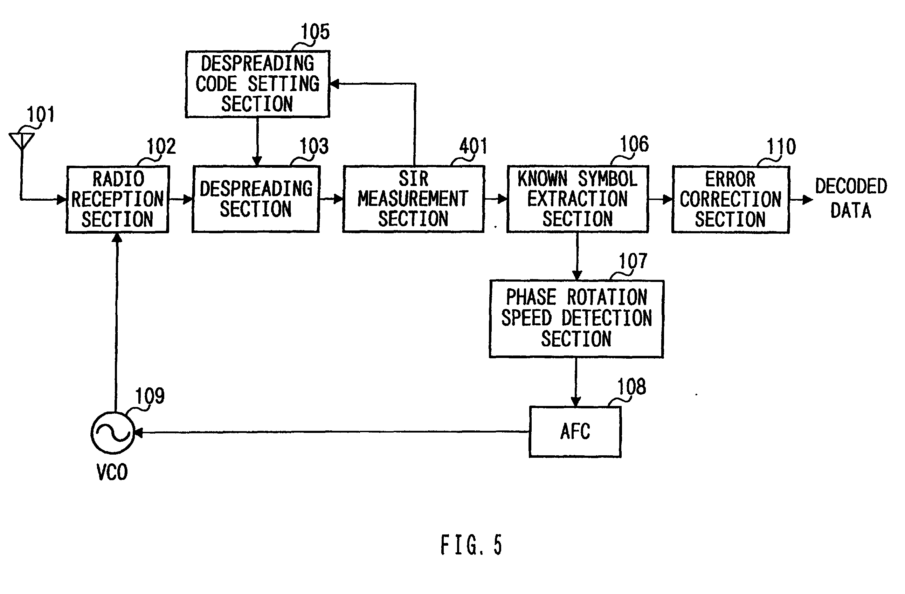

The reception apparatus according to this embodiment will be explained below with reference to FIG.5. FIG.5 is a block diagram showing a configuration of the reception apparatus according to Embodiment 4 of the present invention. The parts in FIG.5 with the same configuration as that of Embodiment 1 (FIG.2) are assigned the same reference numerals as those in FIG.2 and their detailed explanations will be omitted.

In FIG.5, SIR measurement section 401 calculates SIR, that is, RSSI/ISSI of a received known symbol. SIR is a value that allows the magnitude of RSSI and the magnitude of ISSI to be considered simultaneously. SIR is large when RSSI is large or when ISSI is small. SIR is small when the RSSI is small or when the interference signal component is large. Thus, when SIR is larger than a predetermined threshold, SIR measurement section 401 decides that known symbols are being sent.

Thus, according to this embodiment, the accuracy of decision can be improved compared to the case where the presence/absence of a known symbol is decided by only one of RSSI or ISSI of the received known symbol, which makes it possible to accurately detect a period during which no known symbols are sent and appropriately switch between spreading codes. This allows the reception apparatus to always carry out AFC even when the other communication station is not sending known symbols through a communication channel.

(Embodiment 5)

The configuration of the reception apparatus according to this embodiment is identical to the configuration of the reception apparatus of Embodiment 1 described above except that it is decided whether the other communication station is sending a known symbol through a communication channel or not based on the number of error symbols of received known symbols.

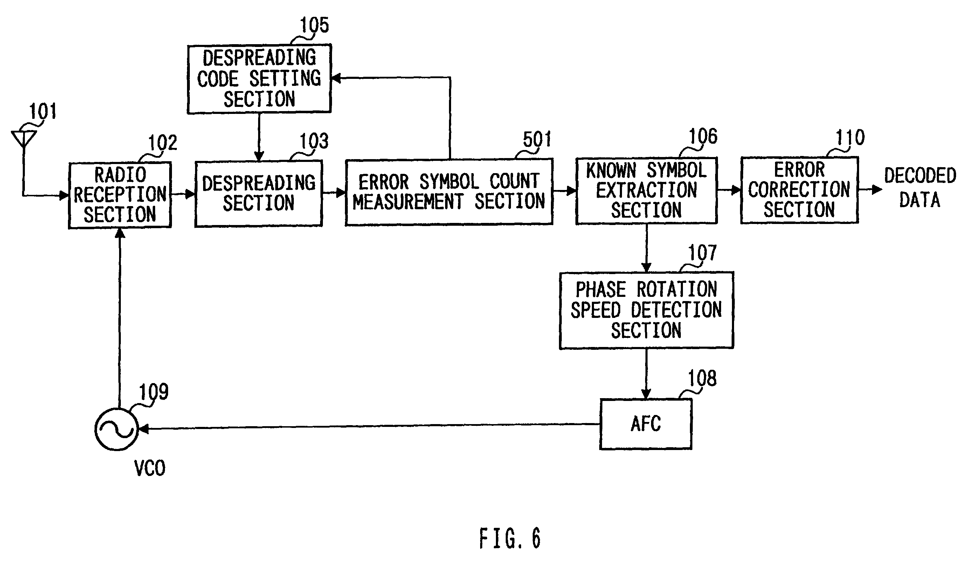

The reception apparatus according to this embodiment will be explained below with reference to FIG.6. FIG.6 is a block diagram showing a configuration of the reception apparatus according to Embodiment 5 of the present invention. The parts in FIG.6 with the same configuration as that of Embodiment 1 (FIG.2) are assigned the same reference numerals as those in FIG.2 and their detailed explanations will be omitted.

In FIG.6, error symbol count measurement section 501 measures the number of error symbols in the received known symbols. RSSI and an error symbol count are correlated; when RSSI is large, the error symbol count is small. Thus, when the error symbol count is larger than a predetermined threshold, symbol count measurement section 501 decides that no known symbols are being sent.

Thus, according to this embodiment, the presence/absence of a known symbol in a communication channel is decided based on the error symbol count in the received known symbols, which makes it possible to accurately detect a period during which no known symbols are being sent and appropriately switch between spreading codes. This allows the reception apparatus to always carry out AFC even when the other communication station is not sending known symbols through a communication channel.

(Embodiment 6)

The configuration of the reception apparatus according to this embodiment is identical to the configuration of the reception apparatus of Embodiment 1 described above except that it is decided whether the other communication station is sending a known symbol through a communication channel or not based on a frame error rate (hereinafter referred to as "FER") of the user data section of a reception signal.

For example, when FER obtained by a CRC check, etc. is large, it is decided that a received known symbol has a low reception quality not appropriate to be used for AFC and a spreading code is changed to one for a common control channel.

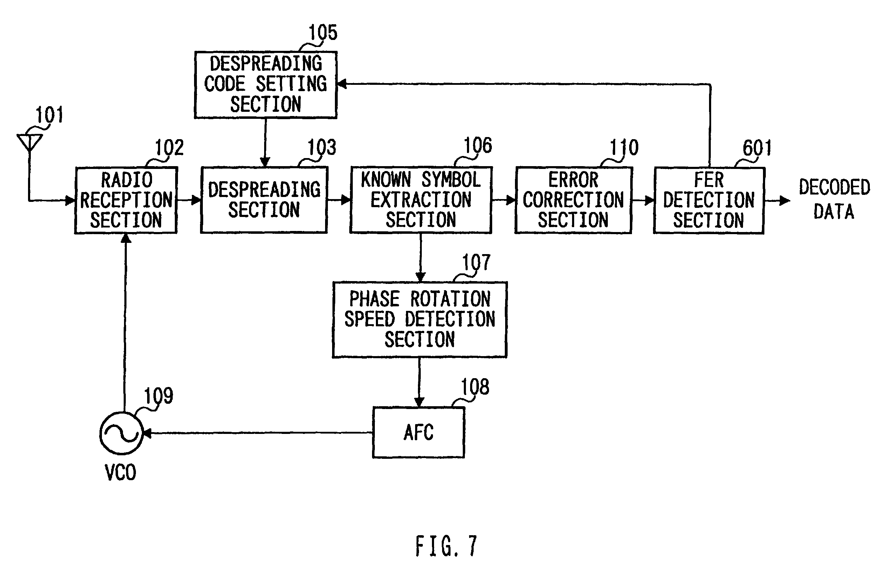

The reception apparatus according to this embodiment will be explained below with reference to FIG.7. FIG.7 is a block diagram showing a configuration of the reception apparatus according to Embodiment 6 of the present invention. The parts in FIG.7 with the same configuration as that of Embodiment 1 (FIG.2) are assigned the same reference numerals as those in FIG.2 and their detailed explanations will be omitted.

In FIG.7, FER detection section 601 carries out frame error detection on decoded data by carrying out, for example, a CRC check and calculates FER = error frame count/total measured frame count. When FER is larger than a predetermined threshold, FER detection section 601 decides that no known symbols are being sent or that the reception quality of the received known symbol is not sufficient to be used for AFC and outputs the decision result to despreading code setting section 105.

Despreading code setting section 105 that receives this decision result sets a spreading code for a common control channel to despreading section 103.

Thus, according to this embodiment, the presence/absence of a known symbol in a communication channel is decided based on FER of user data of a reception signal, which makes it possible to accurately detect with a small amount of operations a period during which no known symbols are being sent and appropriately switch between spreading codes. This allows the reception apparatus to always carry out AFC even when the other communication station is not sending known symbols through a communication channel.

(Embodiment 7)

The configuration of the reception apparatus according to this embodiment is identical to the configuration of the reception apparatus of Embodiment 1 described above except that it is decided whether the other communication station is sending a known symbol through a communication channel or not based on a ratio of the power of the known symbol section to the power of the user data section of the reception signal in a system which provides a predetermined period of time during which the other communication station sends only known symbols for a period after the transmission of user data is stopped until the transmission of known symbols is stopped.

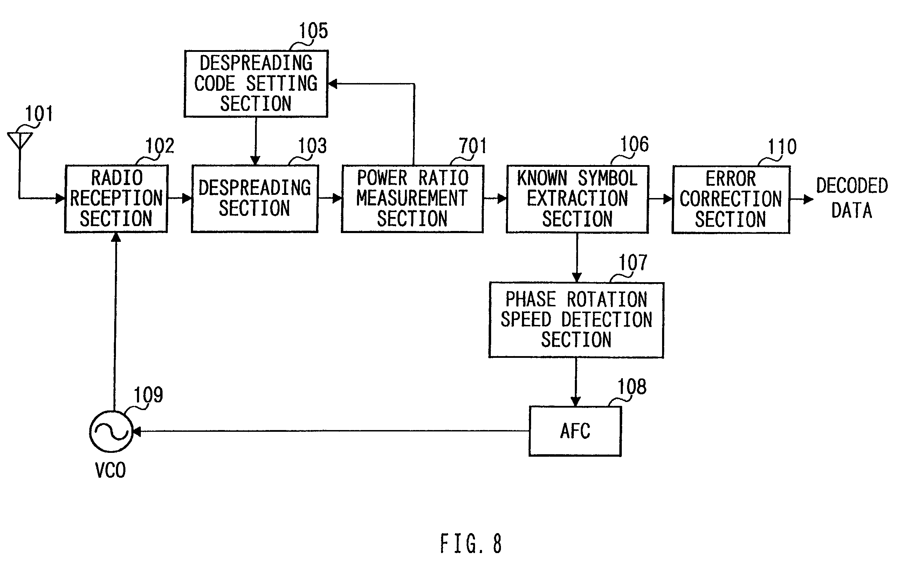

The reception apparatus according to this embodiment will be explained below with reference to FIG.8. FIG.8 is a block diagram showing a configuration of the reception apparatus according to Embodiment 7 of the present invention. The parts in FIG.8 with the same configuration as that of Embodiment 1 (FIG.2) are assigned the same reference numerals as those in FIG.2 and their detailed explanations will be omitted.

In FIG.8, power ratio measurement section 701 measures the power of the known symbol section and the power of the user data section of a desired signal and calculates a power ratio = (power of the known symbol section)/(power of the user data section) . Power ratio measurement section 701 compares this power ratio with a predetermined plurality of thresholds and can thereby decide whether the user data is being sent or not.

Thus, according to this embodiment, the presence/absence of user data in a communication channel is decided based on the ratio of the power of the received known symbol to the power of the data symbol, which makes it possible to accurately detect a period during which no user data is sent and automatically receive known symbols sent through a common control channel in a system which provides a predetermined period of time during which the other communication station sends only known symbols for a period after the transmission of user data is stopped until the transmission of known symbols is stopped. This allows the reception apparatus to always carry out AFC.

(Embodiment 8)

The configuration of the reception apparatus according to this embodiment is identical to the configuration of the reception apparatus of Embodiment 7 described above except that it is provided with a timer that controls timing of switching between spreading codes. As described in Embodiment 7, with power measurement section 701 the reception apparatus can perform AFC using a known symbol of a communication channel even if the other communication station is sending only known symbols through a communication channel for a period, for example, after the transmission of user data is stopped until the transmission of known symbols is stopped.

In a system which provides a predetermined period of time for sending only known symbols for a period until the transmission of known symbols is stopped, the timer according to this embodiment measures that predetermined period of time and switches the spreading code to one for a common control channel after a lapse of the predetermined period of time.

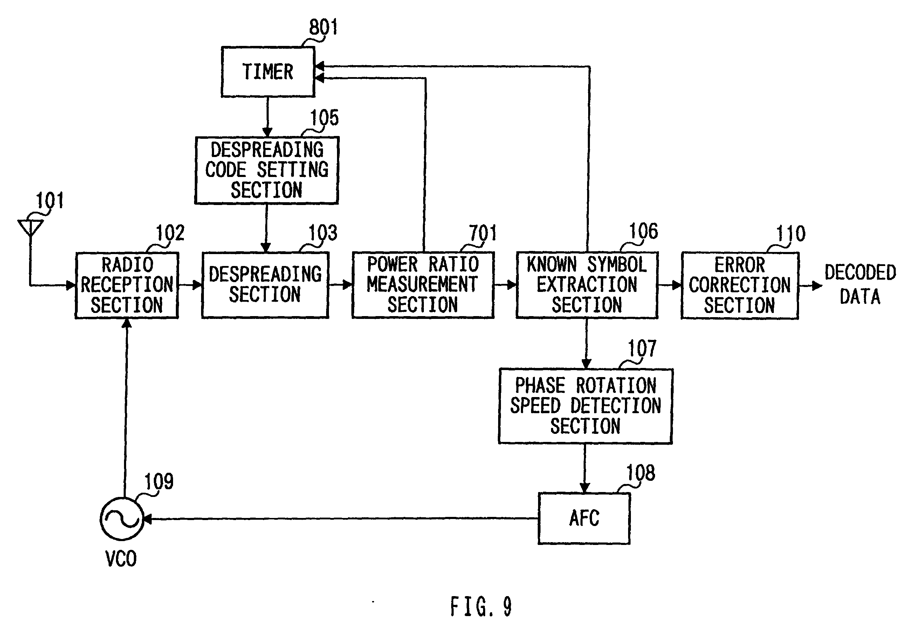

The reception apparatus according to this embodiment will be explained below with reference to FIG.9. FIG.9 is a block diagram showing a configuration of the reception apparatus according to Embodiment 8 of the present invention. The parts in FIG.9 with the same configuration as that of Embodiment 1 (FIG.2) or Embodiment 7 (FIG.8) are assigned the same reference numerals as those in FIG.2 or FIG.8 and their detailed explanations will be omitted.

Timer 801 is a timer to measure a predetermined period of time during which only known symbols are sent through a communication channel, starts when the power ratio in power ratio measurement section 701 is larger than a threshold and stops measurement when user data is detected from the reception signal after a known symbol is extracted by known symbol extraction section 106. Here, the above predetermined period of time is determined for each system.

In the case where user data is not detected even if the above predetermined period of time has elapsed, timer 801 outputs a signal indicating the fact to despreading code setting section 105. When the signal from timer 801 is received, despreading code setting section 105 switches the despreading code in despreading section 103 to one for a common control channel.

As shown above, according to this embodiment, in a system which provides a predetermined period of time during which the other communication station sends only known symbols for a period after the transmission of the user data is stopped until the transmission of known symbols is stopped, while known symbols are sent through a communication channel, those known symbols are received and when the above predetermined period of time elapses, known symbols being transmitted through the common control channel are automatically received. This allows the reception apparatus to always carry out AFC. Here, in the case where the other communication station restarts transmission of user data, AFC is carried out using known symbols of the user data without changing to the common control channel.

(Embodiment 9)

The configuration of the reception apparatus according to this embodiment is identical to the configuration of the reception apparatus of Embodiment 1 described above except that AFC is not carried out for a period during which the other communication station is not sending known symbols through a communication channel.

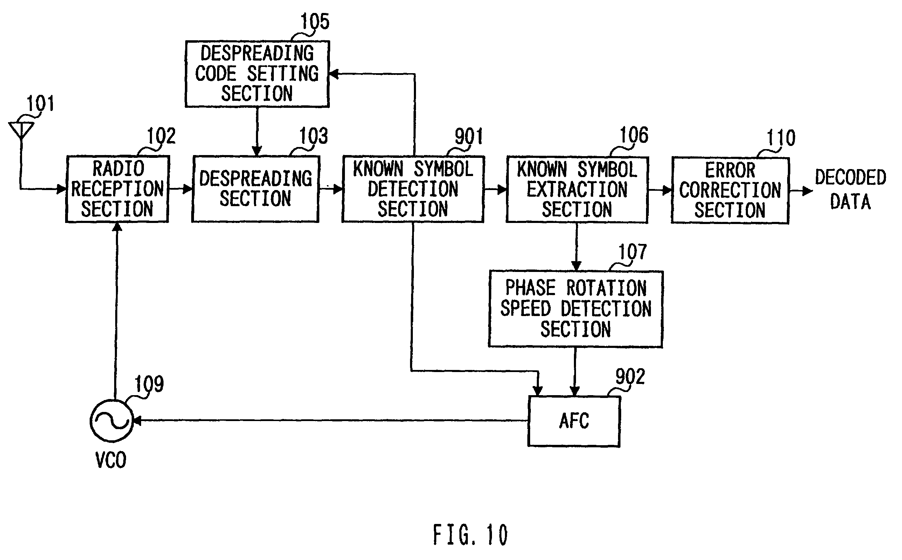

The reception apparatus according to this embodiment will be explained below with reference to FIG.10. FIG.10 is a block diagram showing a configuration of the reception apparatus according to Embodiment 9 of the present invention. The parts in FIG.10 with the same configuration as that of Embodiment 1 (FIG.2) are assigned the same reference numerals as those in FIG.2 and their detailed explanations will be omitted.

In FIG.10, known symbol detection section 901 decides whether known symbols are sent through a communication channel. For known symbol detection section 901, the RSSI measurement section, ISSI measurement section, SIR measurement section, error symbol count measurement section, FER measurement section and power ratio measurement section described above, etc. can be used.

AFC 902 calculates a phase shift to be corrected from the phase rotation speed, which is the output of phase rotation speed detection section 107, converts the calculated phase shift to a control voltage and outputs this control voltage to VCO 109. AFC 902 is controlled by the decision result in known symbol detection section 901. That is, when the decision result shows that there are known symbols, AFC 902 carries out normal AFC and when the decision result shows that there are no known symbols, AFC 902 stops updating the output of the control voltage to VCO 109 (that is, the control voltage output to VCO 109 is not changed).

AS shown above, according to this embodiment, when it is decided that the other communication station is not sending known symbols through the communication channel, AFC is stopped and VCO is held so that the frequency at that time is maintained. This makes it possible to prevent carrier frequency errors from contrarily increasing by always carrying out AFC when the reception quality is poor.

(Embodiment 10)

The configuration of the reception apparatus according to this embodiment is identical to the configuration of the reception apparatus of Embodiment 1 described above except that AFC is carried out using known symbols in a communication channel directed to other stations.

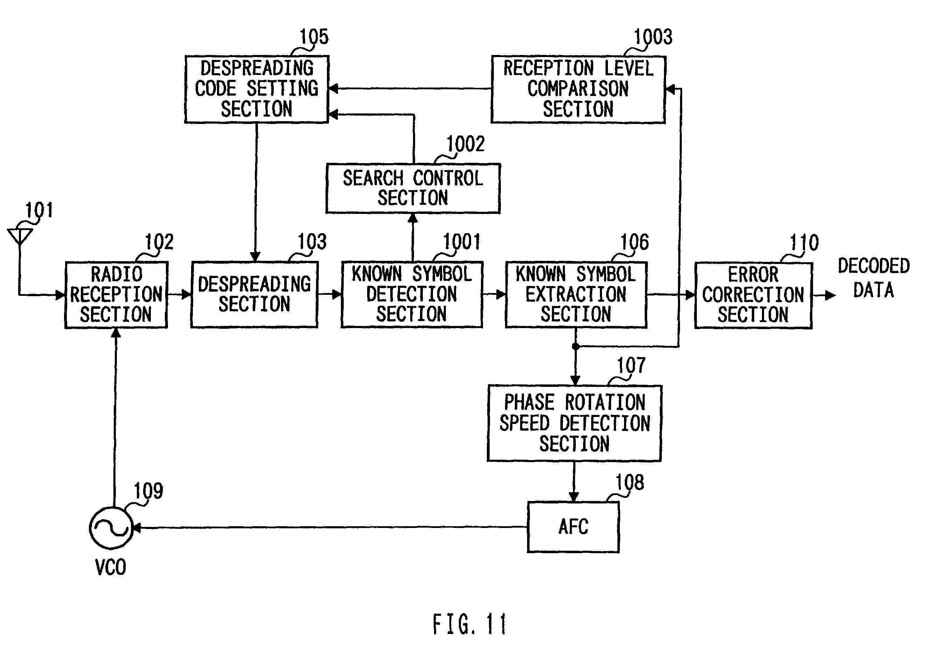

The reception apparatus according to this embodiment will be explained below with reference to FIG.11. FIG.11 is a block diagram showing a configuration of the reception apparatus according to Embodiment 10 of the present invention. The parts in FIG.11 with the same configuration as that of Embodiment 1 (FIG.2) are assigned the same reference numerals as those in FIG.2 and their detailed explanations will be omitted.

In FIG.11, known symbol detection section 1001 decides whether known symbols are sent through a communication channel or not. For known symbol detection section 1001, the RSSI measurement section, ISSI measurement section, SIR measurement section, error symbol count measurement section, FER measurement section and power ratio measurement section described above, etc. can be used.

When known symbol detection section 1001 decides that the other communication station is not sending known symbols, search control section 1002 starts, controls despreading code setting section 105 and sets various despreading codes in despreading section 103. In this way, despreading section 103 receives a signal that the other communication station is sending to the own station or other stations.

Reception level comparison section 1003 detects and compares the reception levels of known symbols in the signals directed to the own station or other stations received by the function of search control section 1002 and selects the signal with the highest reception level. Thereafter, despreading code setting section 105 sets a spreading code of the signal selected by reception level comparison section 1003 and carries out AFC using the known symbols in the signal.

Thus, according to this embodiment, AFC is carried out using a known symbol with the highest reception level among the known symbols in the transmission signal directed to the own station or other stations, which allows accurate AFC even when the other communication station is not transmitting signals. This also eliminates the need for the other communication station to always send a common control channel.

(Embodiment 11)

The configuration of the reception apparatus according to this embodiment is identical to the configuration of the reception apparatus of Embodiment 10 described above except that the reception apparatus includes a timer to control a search time.

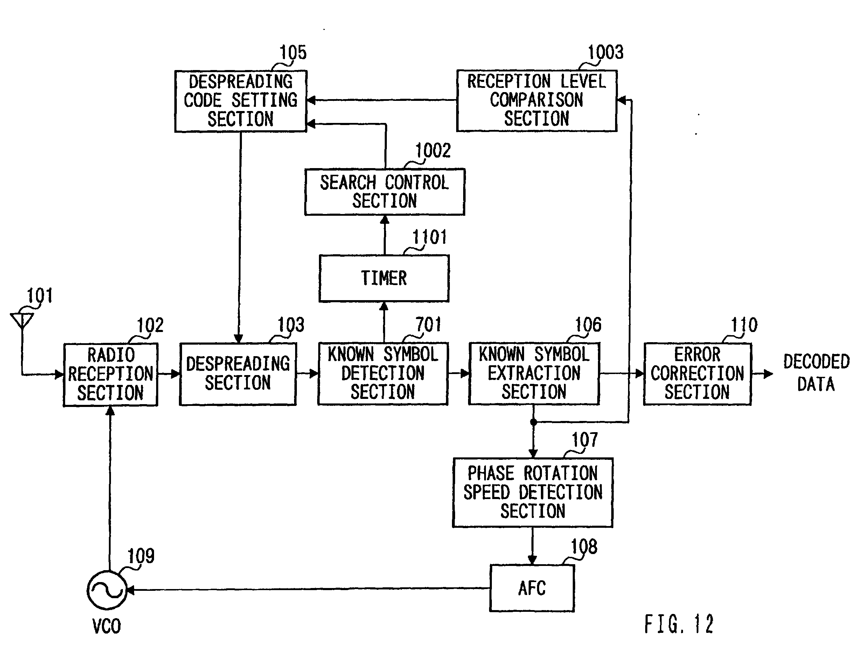

The reception apparatus according to this embodiment will be explained below with reference to FIG.12. FIG.12 is a block diagram showing a configuration of the reception apparatus according to Embodiment 11 of the present invention. The parts in FIG.12 with the same configuration as that of Embodiment 1 (FIG.2), Embodiment 7 (FIG.8) or Embodiment 10 (FIG.11) are assigned the same reference numerals as those in FIG.2, FIG.8 or FIG.11 and their detailed explanations will be omitted.

In a system which provides a predetermined period of time during which only known symbols are sent until the transmission of known symbols is stopped as shown in Embodiment 8, the timer according to this embodiment measures the predetermined period, ends the search after that predetermined period has elapsed and selects a communication channel to be received at that time.

In FIG.12, timer 1101 measures a predetermined time during which only known symbols are sent through a communication channel, starts when the power ratio in power ratio measurement section 701 is equal to or greater than a threshold, stops measurement when a data symbol is detected from the reception signal after known symbol extraction section 106 extracts the known symbol and stops search control section 1002. Here, the predetermined time above is set for each system.

When no data symbol is detected even after the above predetermined time has elapsed, timer 1101 outputs a signal indicating the fact to reception level comparison section 1003. When reception level comparison section 1003 receives the signal from timer 1101, reception level comparison section 1003 selects the communication channel with the highest reception level.

Thus, according to this embodiment, in a system that provides a predetermined period of time during which the other communication station sends only known symbols for a period after the transmission of user data is stopped until the transmission of known symbols is stopped, when the reception level of known symbols in the transmission channel directed to the own station or the other stations is detected after the transmission of user data is stopped, it is possible to discard the detected reception level and restart the reception of a normal communication channel in the case where the transmission of user data is restarted within a predetermined time and always perform AFC using a signal with the highest reception level at that time in the case where the transmission of user data is not restarted within the predetermined time. Moreover, the other communication station need not always send signals through a common control channel.

Embodiments 1 to 8 above are based on the premise that the other communication station is sending known symbols through a common control channel and can be implemented in combinations among the embodiments as appropriate.

The reception apparatus of the present invention comprises a decision section that decides whether a desired signal exists or not in the reception signal, a code selection section that selects a code from a plurality of spreading codes based on the decision result of the decision section, despreading section that performs despreading processing using the spreading code selected by the code selection section and extracts a desired signal and a correction section that corrects carrier frequency drifts using a known symbol in the extracted desired signal.

According to this configuration, even if the other communication station is not sending desired signals, it is possible to reset a spreading code and correct carrier frequency drifts using the known symbol of the signal being sent through another channel, which allows a system that does not send a known symbol when no user data is transmitted and a packet communication system for which intermittent transmission/reception is scheduled, to reduce carrier frequency errors.

In the reception apparatus of the present invention with the above configuration, when the decision section decides that no desired signal exists, the code selection section selects a spreading code of the common control channel.

According to this configuration, even if the other communication station is not sending desired signals, it is possible to reset a spreading code and correct carrier frequency drifts using the known symbol of the signal being sent through the common control channel, which allows a system that does not send a known symbol when no user data is transmitted and a packet communication system for which intermittent transmission/reception is scheduled, to reduce carrier frequency errors.

In the reception apparatus of the present invention with the above configuration, the decision section includes a measurement section that measures a time after the time at which the ratio of the reception power value of the known symbol section to the reception power value of the part other than the known symbol exceeds a threshold and decides that no desired signal exists in the case where a predetermined time has passed without the reception power value ratio falling below the threshold.

According to this configuration, in a system which provides a certain period of time during which the other communication station sends only known symbols for a period after the transmission of user data is stopped until the transmission of known symbols is stopped, it is possible to receive a communication channel while the communication channel is sending a desired signal and automatically receive the common control channel when the above predetermined time has elapsed, which allows carrier frequency drifts to be always corrected.

In the reception apparatus of the present invention with the above configuration, when the decision section decides that no desired signal exists, the correction section does not correct carrier frequency drifts.

According to this configuration, when it is decided that the other communication station is not sending desired signals, the reception apparatus does not correct carrier frequency drifts and holds the oscillator to maintain the frequency at that time, thus preventing carrier frequency errors from contrarily increasing by always correcting carrier frequency drifts when the reception quality is poor.

The communication terminal apparatus of the present invention has a configuration comprising a reception apparatus, which comprises a decision section that decides whether a desired signal exists or not in the reception signal, a code selection section that selects a code from a plurality of owned spreading codes based on the decision result of the decision section, despreading section that performs despreading processing using the spreading code selected by the code selection section and extracts a desired signal and a correction section that corrects a carrier frequency drift using the known symbol in the extracted desired signal.

This configuration allows frequency drifts to be corrected not only when the other communication station is sending desired signals but also when the other communication station is not sending desired signals, thus improving the channel quality.

The base station apparatus of the present invention has a configuration carrying out a communication with a communication terminal apparatus equipped with a reception apparatus, which comprises a decision section that decides whether a desired signal exists or not in the reception signal, a code selection section that selects a code from a plurality of owned spreading codes based on the decision result of the decision section, despreading section that performs despreading processing using the spreading code selected by the code selection section and extracts a desired signal and a correction section that corrects a carrier frequency drift using the known symbol in the extracted desired signal.

This configuration allows the communication terminal apparatus, which is the other communication station, to correct frequency drifts not only when a signal is being sent through a communication channel but also when no signal is being sent through a communication channel, thus improving the channel quality.

The reception method of the present invention comprises a decision step that decides whether a desired signal exists or not in the reception signal, a code selection step that selects a code from a plurality of owned spreading codes based on the decision result of the decision section, a despreading step that performs despreading processing using the spreading code selected by the code selection step and extracts a desired signal and a correction step that corrects a carrier frequency drift using the known symbol in the extracted desired signal.

According to this method, even if the other communication station is not sending desired signals, it is possible to reset a spreading code and correct a carrier frequency drift using the known symbol of the signal being sent through another channel, which allows a system that does not send a known symbol when no user data is transmitted and a packet communication system for which intermittent transmission/reception is scheduled to reduce carrier frequency errors.

In the reception method of the present invention, when the decision step decides that no desired signal exists, the code selection step selects a spreading code of the common control channel.

According to this method, even if the other communication station is not sending desired signals, this method makes it possible to reset a spreading code and correct a carrier frequency drift using the signal being sent through the common control channel, which allows a system that does not send a known symbol when no user data is transmitted and a packet communication system for which intermittent transmission/reception is scheduled to reduce carrier frequency errors.

In the reception method of the present invention, the decision step measures a time after the time at which the ratio of the reception power value of the known symbol section to the reception power value of the part other than the known symbol exceeds a threshold and decides that no desired signal exists in the case where a predetermined time has passed without the reception power value ratio falling below the threshold.

According to this method, in a system which provides a predetermined period of time during which the other communication station sends only known symbols for a period after the transmission of user data is stopped until the transmission of known symbols is stopped, it is possible to receive a communication channel while the communication channel is sending a desired signal and automatically receive the common control channel when the above predetermined time has elapsed, which allows carrier frequency drifts to be always corrected.

In the reception method of the present invention, when the decision step decides that no desired signal exists, the correction step does not correct carrier frequency drifts.

According to this method, when it is decided that the other communication station is not sending desired signals, this method does not correct carrier frequency drifts and holds the oscillator to maintain the frequency at that time, thus preventing carrier frequency errors from contrarily increasing by always correcting carrier frequency drifts when the reception quality is poor.

In the reception method of the present invention, when the decision step decides that there is no reception signal, the code selection step detects the reception level of the known symbol section of the reception signal when each spreading code is applied while switching the plurality of spreading codes one after another and selects the spreading code with the highest reception level.

According to this method, a carrier frequency drift is corrected using the known symbol with the highest reception level from among known symbols in the communication channel directed to the own station or other stations, and therefore it is possible to accurately correct carrier frequency drifts even if the other communication station is not sending desired signals.

In the reception method of the present invention, the decision step measures a predetermined time after the time at which the ratio of the power value of the desired signal of the known symbol section of the reception signal to the power value of the desired signal of the part other than the known symbol of the reception signal exceeds a threshold, stops measurement of the predetermined time when the power value ratio falls below the threshold and the code selection step stops selection of a spreading code when the predetermined time has elapsed and selects the known symbol with the highest reception level when the predetermined time has elapsed as the spreading code to be used for despreading processing.

According to this method, in a system which provides a predetermined period of time during which the other communication station sends only known symbols for a period after the transmission of user data is stopped until the transmission of known symbols is stopped, when the reception level of the known symbol in the transmission channel directed to the own station or the other stations is detected after the transmission of user data is stopped, it is possible to discard the detected reception level and restart the reception of a normal communication channel in the case where the transmission of user data is restarted within a predetermined time and always correct carrier frequency drifts to receive the channel with the highest reception level at that time in the case where the transmission of user data is not restarted within the predetermined time.

As described above, the present invention can correct frequency drifts not only when the other communication station is sending signals through a communication channel but also when the other communication station is not sending signals through a communication channel.

This application is based on the Japanese Patent Application No.HEI 11-009110 filed on January 18, 1999, entire content of which is expressly incorporated by reference herein.

Industrial Applicability

This invention is ideally applicable to the field of CDMA-based communications.

**Claims**

1. A reception apparatus comprising:

   deciding means for deciding whether a desired signal exists in a reception signal or not;
   code selecting means for selecting a code from among a plurality of owned spreading codes based on the decision result of said deciding means;
   despreading means for performing despreading processing using the spreading code selected by said code selecting means and extracting a desired signal; and
   correcting means for correcting carrier frequency drifts using a known symbol in the extracted desired signal.

2. The reception apparatus according to claim 1, wherein said code selecting means selects a spreading code of a common control channel when said deciding means decides that there is no desired signal.

3. The reception apparatus according to claim 2, wherein said deciding means comprises a measuring section that measures a time after the time at which the ratio of the reception power value of the known symbol section to the reception power value of the part other than the known symbol exceeds a threshold and in the case where a predetermined time has elapsed without said reception power value ratio falling below said threshold, said deciding means decides that there is no desired signal.

4. The reception apparatus according to claim 1, wherein said correcting means does not correct carrier frequency drifts when said deciding means decides that there is no desired signal.

5. A communication terminal apparatus equipped with a reception apparatus, said reception apparatus comprising:

   deciding means for deciding whether a desired signal exists in a reception signal or not;
   code selecting means for selecting a code from among a plurality of owned spreading codes based on the decision result of said deciding means;
   despreading means for performing despreading processing using the spreading code selected by said code selecting means and extracting a desired signal; and
   correcting means for correcting carrier frequency drifts using a known symbol in the extracted desired signal.

6. A base station apparatus that carries out a communication with a communication terminal apparatus equipped with a reception apparatus, said reception apparatus comprising:

   deciding means for deciding whether a desired signal exists in a reception signal or not;

code selecting means for selecting a code from among a plurality of owned spreading codes based on the decision result of said deciding means;

despreading means for performing despreading processing using the spreading code selected by said code selecting means and extracting a desired signal; and

correcting means for correcting carrier frequency drifts using a known symbol in the extracted desired signal.

7. A reception method comprising:

the deciding step of deciding whether a desired signal exists in a reception signal or not;

the code selecting step of selecting a code from among a plurality of owned spreading codes based on the decision result of said deciding step;

the despreading step of performing despreading processing using the spreading code selected by said code selecting step and extracting a desired signal; and

the correcting step of correcting carrier frequency drifts using a known symbol in the extracted desired signal.

8. The reception method according to claim 7, wherein said code selecting step selects a spreading code of a common control channel when said deciding step decides that there is no desired signal.

9. The reception method according to claim 8, wherein said deciding step measures a time after the time at which the ratio of the reception power value of the known symbol section to the reception power value of the part other than the known symbol exceeds a threshold and in the case where a predetermined time has elapsed without said reception power value ratio falling below said threshold, said deciding step decides that there is no desired signal.

10. The reception method according to claim 7, wherein said correcting step does not correct carrier frequency drifts when said deciding step decides that there is no desired signal.

11. The reception method according to claim 7, wherein, when said deciding step decides that there is no reception signal, said code selecting step detects the reception level of the known symbol section of the reception signal when each spreading code is applied while changing said plurality of spreading codes one after another and selects the spreading code with the highest reception level.

12. The reception method according to claim 11, wherein, said deciding step measures a predetermined time after the time at which the ratio of the power value of a desired signal of the known symbol section of the reception signal to the power value of a desired signal of the part other than the known symbol exceeds a threshold and in the case where said power value ratio falls below said threshold, stops measurement of said predetermined time and when said predetermined time has elapsed, said code selecting step stops selection of a spreading code and selects the known symbol with the highest reception level when said predetermined time has elapsed as the spreading code to be used for despreading processing.

FIG. 1

EP 1 065 798 A1

FIG. 2

FIG. 3

EP 1 065 798 A1

FIG. 4

EP 1 065 798 A1

FIG. 5

FIG. 6

DECODED DATA

110 ERROR CORRECTION SECTION

106 KNOWN SYMBOL EXTRACTION SECTION

107 PHASE ROTATION SPEED DETECTION SECTION

108 AFC

501 ERROR SYMBOL COUNT MEASUREMENT SECTION

105 DESPREADING CODE SETTING SECTION

103 DESPREADING SECTION

102 RADIO RECEPTION SECTION

101

109 VCO

DECODED DATA

601 FER DETECTION SECTION

110 ERROR CORRECTION SECTION

106 KNOWN SYMBOL EXTRACTION SECTION

107 PHASE ROTATION SPEED DETECTION SECTION

108 AFC

105 DESPREADING CODE SETTING SECTION

103 DESPREADING SECTION

102 RADIO RECEPTION SECTION

101

109 VCO

FIG. 7

FIG. 8

EP 1 065 798 A1

FIG. 9

FIG. 10

FIG. 11

DECODED DATA

110 — ERROR CORRECTION SECTION

1003 — RECEPTION LEVEL COMPARISON SECTION

106 — KNOWN SYMBOL EXTRACTION SECTION

107

PHASE ROTATION SPEED DETECTION SECTION

108

AFC

1002 — SEARCH CONTROL SECTION

1101

TIMER

701 — KNOWN SYMBOL DETECTION SECTION

105 — DESPREADING CODE SETTING SECTION

103 — DESPREADING SECTION

102 — RADIO RECEPTION SECTION

191

109

VCO

FIG. 12

# INTERNATIONAL SEARCH REPORT

| International application No. |
| --- |
| PCT/JP00/00166 |

**A. CLASSIFICATION OF SUBJECT MATTER**
Int.Cl$^7$  H04B1/707

According to International Patent Classification (IPC) or to both national classification and IPC

**B. FIELDS SEARCHED**

Minimum documentation searched (classification system followed by classification symbols)
Int.Cl$^7$  H04B1/69-1/713, H04J13/00-13/06

Documentation searched other than minimum documentation to the extent that such documents are included in the fields searched
Jitsuyo Shinan Koho          1926-1996     Toroku Jitsuyo Shinan Koho  1994-2000
Kokai Jitsuyo Shinan Koho  1971-2000     Jitsuyo Shinan Toroku Koho  1996-2000

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP, 9-83484, A (Hitachi, Ltd.),<br>28 March, 1997 (28.03.97),<br>Full text; Figs. 1 to 19<br>& EP, 76266, A2       & US, 5943329, A<br>& CA, 2184938, A      & KR, 97019256, A | 1-12 |
| P,A | JP, 11-41203, A (Matsushita Electric Ind. Co., Ltd.),<br>12 February, 1999 (12.02.99),<br>Full text; Figs. 1 to 9<br>& WO, 99/04591, A1   & CN, 1234954, A<br>& AU, 9882434, A     & EP, 936831, A1 | 1-12 |
| P,A | JP, 11-266230, A (Matsushita Electric Ind. Co., Ltd.),<br>28 September, 1999 (28.09.99),<br>Full text; Figs. 1 to 6   (Family: none) | 1-12 |

| ☐ Further documents are listed in the continuation of Box C. | ☐ See patent family annex. |
| --- | --- |

| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| --- | --- |

| Date of the actual completion of the international search<br>07 April, 2000 (07.04.00) | Date of mailing of the international search report<br>25 April, 2000 (25.04.00) |
| --- | --- |
| Name and mailing address of the ISA/<br>Japanese Patent Office | Authorized officer |
| Facsimile No. | Telephone No. |

Form PCT/ISA/210 (second sheet) (July 1992)